(19) Europäisches Patentamt / European Patent Office / Office européen des brevets

(11) **EP 3 621 133 B1**

(12) **EUROPEAN PATENT SPECIFICATION**

(45) Date of publication and mention
of the grant of the patent:
**06.09.2023 Bulletin 2023/36**

(21) Application number: **17904541.4**

(22) Date of filing: **11.12.2017**

(51) International Patent Classification (IPC):
$H01M\ 4/134$ (2010.01)    $H01M\ 4/66$ (2006.01)
$H01M\ 4/38$ (2006.01)    $H01M\ 4/62$ (2006.01)
$H01M\ 4/1395$ (2010.01)    $H01M\ 4/04$ (2006.01)
$H01M\ 10/052$ (2010.01)    $H01M\ 4/36$ (2006.01)

(52) Cooperative Patent Classification (CPC):
**H01M 4/134; H01M 4/1395; H01M 4/366;
H01M 4/382; H01M 4/628; H01M 4/661;
H01M 10/052;** Y02E 60/10

(86) International application number:
**PCT/KR2017/014467**

(87) International publication number:
**WO 2018/186555 (11.10.2018 Gazette 2018/41)**

(54) **ANODE FOR SECONDARY BATTERY, MANUFACTURING METHOD THEREFOR, AND LITHIUM SECONDARY BATTERY MANUFACTURED USING SAME**

ANODE FÜR SEKUNDÄRBATTERIE, HERSTELLUNGSVERFAHREN DAFÜR UND DAMIT HERGESTELLTE LITHIUM-SEKUNDÄRBATTERIE

ANODE POUR BATTERIE RECHARGEABLE, SON PROCÉDÉ DE FABRICATION ET BATTERIE RECHARGEABLE AU LITHIUM LA COMPRENANT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **07.04.2017 KR 20170045396**

(43) Date of publication of application:
**11.03.2020 Bulletin 2020/11**

(73) Proprietor: **LOTTE ENERGY MATERIALS
CORPORATION
Iksan-si, Jeollabuk-do 54586 (KR)**

(72) Inventors:
• **LEE, Sun Hyoung
Iksan-si
Jeollabuk-do 54552 (KR)**
• **CHOI, Eun Sil
Jeonju-si
Jeollabuk-do 55062 (KR)**
• **JO, Tae Jin
Seongnam-si
Gyeonggi-do 13225 (KR)**
• **KIM, Hyung Cheol
Jeongeup-si
Jeollabuk-do 56178 (KR)**
• **SONG, Ki Deok
Suwon-si
Gyeonggi-do 16593 (KR)**

(74) Representative: **Meissner Bolte Partnerschaft
mbB
Patentanwälte Rechtsanwälte
Postfach 86 06 24
81633 München (DE)**

(56) References cited:
EP-A1- 2 654 111          WO-A1-2013/002273
CN-A- 104 966 814        JP-A- 2003 208 891
JP-A- 2010 160 982       KR-A- 20140 147 686
KR-A- 20150 062 228     KR-B1- 101 500 565
US-A1- 2010 104 951

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

- JENNIFER HEINE ET AL: "Coated Lithium Powder (CLiP) Electrodes for Lithium-Metal Batteries", ADVANCED ENERGY MATERIALS, vol. 4, no. 5, 18 November 2013 (2013-11-18), pages n/a-n/a, XP055129873, ISSN: 1614-6832, DOI: 10.1002/aenm.201300815

**Description**

[Technical Field]

The present invention relates to an anode for a secondary battery, a manufacturing method therefor, and a lithium secondary battery manufactured by using the same, and more particularly, to an anode for a high-capacity secondary battery with improved safety and lifespan characteristics, a manufacturing method therefor, and a lithium secondary battery manufactured by using the same.

[Background Art]

A secondary battery means a battery which can be charged unlike a primary battery, such as a battery used once and discarded. Various batteries, such as a lead storage battery, a nickel cadmium battery, and a nickel metal hydride battery, are included in a category of a secondary battery, and in general, a name of a battery is determined by a material used for an electrode. For example, in a lead storage battery, lead is used for an anode, so that lead causes an oxidation-reduction reaction during a charging/discharging process, and a nickel cadmium battery is a battery in which cadmium is used for an anode, and a nickel metal hydride battery is a battery in which a nickel hydride alloy is used for an anode.

A lithium secondary battery is one of the most advanced types of secondary batteries, and is a battery in which lithium ions participate in an oxidation-reduction reaction in an anode, and lithium, of which a density is 0.53 g/cm$^3$, is the lightest alkali metal present on earth and has a characteristic with the lowest standard oxidation reduction potential. By the characteristics, many studies have been conducted to use lithium as an anode of a battery.

In the meantime, lithium can cause a strong oxidation reaction with moisture or air, and in the case where a lithium metal is used as an anode of a secondary battery, due to a problem in safety, such as short circuiting between electrodes due to the generation of dendrite, a secondary battery in which a lithium metal itself is applied as an anode has many difficulties in commercialization.

Main elements of a lithium secondary battery are a cathode, an anode, an electrolyte, and a separation membrane, and the cathode and the anode provide a place in which an oxidation reduction reaction occurs, the electrolyte plays a role of delivering lithium ions between the cathode and the anode, and the separation membrane plays a role of providing an electric insulation so that a cathode and an anode do not come into contact with each other. According to an operation principle of a lithium ion battery, after lithium is oxidized to lithium ions in an anode during discharging, the lithium ions are moved to a cathode through an electrolyte, and generated electrons are moved to a cathode through outside wires. At the cathode, lithium ions moved from the anode are inserted to accept the electrons and cause a reduction reaction. On the contrary to this, during charging, the oxidation reaction takes place at the cathode, and the reduction reaction takes place at the anode.

In general, considering that a cathode in a lithium secondary battery (full cell) is an important factor determining a capacity of the entire electrode, even though all inherent capacity of a material of a cathode is fully exhibited, when the irreversible discharge capacity is generated at an anode, a phenomenon that the capacity and performance of the whole battery are inevitably lowered is shown.

In order to prevent the phenomenon, many studies on SiOx as an anode active material have been carried out, and for example, Korean Patent Application Laid-Open No. 2012-7011002 discloses an anode active material for a lithium ion secondary battery using SiOx, but there is a limitation in that a characteristic of a charging/discharging cycle cannot be sufficiently improved and there is a problem in that it is difficult to adjust a value of x in SiOx by an existing synthesis method.

In addition, a technology for suppressing expansion and contraction by charging/discharging by using a carbon-based material as a material of an anode active material has also been proposed (Japanese Patent Application Laid-Open Nos. 1993-286763 and 1998-003920), but there is also a problem in that a capacity is decreased and initial charging/discharging efficiency is lowered compared to the case where a lithium metal or a lithium alloy is used as an anode active material.

In the meantime, when a lithium metal or a lithium alloy itself is used as an anode active material, improved electro-chemical behavior and a high capacity may be exhibited, but the formation of a dendrite structure causes a short-circuit of a battery to decrease a life span or in severe cases, there is a problem in safety, such as an explosion of a battery.

Therefore, various studies on a material of an anode for a secondary battery, which is capable of implementing a high capacity and has improved safety and lifespan characteristics at the same time, have been conducted.

For example CN 104 966 814 A discloses an anode for a secondary battery comprising an active material including lithium powder which is coated with a protective silane coupling agent.

[Disclosure]

[Technical Problem]

An object of the present invention is to provide an anode for a secondary battery, a manufacturing method thereof, and a lithium secondary battery produced by using the same, and provide an anode for a secondary battery, in which a current density is decreased at an anode, so that the formation of a dendritic material (dendrite) is suppressed, as an anode which is capable of implementing a high capacity by using lithium powder, a manufacturing method thereof, and a lithium secondary battery manufactured by using the same.

Another object of the present invention is to provide an anode for a secondary battery, which has a large width of 150 mm or more even though lithium powder is used as an anode active material, and a lithium secondary battery manufactured by using the same.

Another object of the present invention is to provide an anode for a secondary battery, which has a high capacity and has an improve lifespan characteristic compared to the case where existing graphite is used as an anode, and a lithium secondary battery manufactured by using the same.

[Technical Solution]

According to one aspect of the present invention, exemplary embodiments of the present invention include an anode for a secondary battery, the anode including: an electrolytic copper foil current collector; an anode active material layer which is provided on a single surface or both surfaces of the electrolytic copper foil current collector and includes lithium powder; and a protective layer provided on the anode active material layer, in which a thickness of the electrolytic copper foil current collector is 2 $\mu$m to 20 $\mu$m, and a thickness of the anode active material layer and the protective layer provided on the electrolytic copper foil current collector is 100 $\mu$m or less.

The thickness of the anode active material layer and the protective layer after rolling processing is 20% to 90% of the thickness of the anode active material layer and the protective layer before the rolling processing.

Room-temperature tensile strength of the electrolytic copper foil current collector is 30 kgf/mm$^2$ to 50 kgf/mm$^2$ (294,2 MPa to 490,3 MPa), and high-temperature tensile strength of the electrolytic copper foil current collector after the electrolytic copper foil current collector is maintained at a temperature of 140°C for six hours is 20 kgf/mm$^2$ to 50 kgf/mm$^2$ (196,1 MPa to 490,3 MPa).

Internal energy of the electrolytic copper foil current collector according to Formula 1 below is 0.3 kgf/mm to 8.5 kgf/mm (0,00294 J to 0,0836 J).

[Formula 1]

$$\text{Internal energy (kgf/mm)} = \text{Tensile strength (kgf/mm}^2\text{)} \times \text{Elongation percentage (\%)} \times \text{Thickness (mm)}$$

Surface roughness is provided on the single surface or both surfaces of the electrolytic copper foil current collector, and the anode active material layer is provided on the surface provided with the surface roughness in the electrolytic copper foil current collector.

The anode active material layer may include lithium powder and a binder, and a weight ratio of the lithium powder and the binder is 90 : 10 to 99.5 : 0.5.

An average grain size of the lithium powder may be 5 $\mu$m to 250 $\mu$m.

The protective layer may include a silicon atom (Si) of 1 atom% or more in an Energy Dispersive X-ray (EDX) spectrometer analysis.

The protective layer may be formed by silane coupling processing by using one or more silane coupling agents selected from methyltrimethoxysilane, tetraethoxysilane, 3-glycidoxypropyl trimethoxysilane, 2-(3,4-epoxycyclohexyl)etyltrimethoxysilane, 3-aminopropyl trimethoxysilane, N-2-(aminoethyl)-3-aminopropyl trimethoxysilane, N-2-(aminoethyl)-3-aminoprophylmethyl demethoxysilane, vinyl trimethoxysilane, vinyl phenyl trimethoxysilane, vinyltris(2-methoxyethoxy)silane, 3-acryloxypropyl trimethoxysilane, 3-methacryloxypropyl trimethoxysilane, 3-mercaptopropyltrimethoxysilane, dimethylchlorosilane, methyldichlorosilane, methyltrichlorosilane, phenyltrichlorosilane, trichlorosilane, trimethylchlorosilane, silicon tetrachloride, and vinyltrichlorosilane.

The protective layer may be formed by coating the anode active material layer with a trimethoxy silane-based coupling agent solely or a composition including the trimethoxy silane-based coupling agent and an inorganic material.

The thickness of the anode active material layer and the protective layer may be 20 $\mu$m to 100 $\mu$m.

The thickness of the anode active material layer and the protective layer may be 20 $\mu$m, and a capacity may be 4.2 mAh/cm² or more.

The anode may be provided in a sheet type having a short axis and a long axis, and an average length (width) of the short axis may be 150 mm to 2,000 mm.

An NP ratio (an anode capacity per unit area/a cathode capacity per unit area) of the anode for the secondary battery may be 18 or less.

The NP ratio (an anode capacity per unit area/a cathode capacity per unit area) of the anode for the secondary battery may be 3.5 to 18.0.

When a current density of the secondary battery is 10 mA/cm², sand time may be 100 minutes or longer.

When a symmetric cycling test is performed by rolling the anode active material layer, a potential value even after 60 hours may be 0.2 V to - 0.2 V.

According to another aspect of the present invention, exemplary embodiments of the present invention include a method of manufacturing an anode for a secondary battery, the method including: preparing an electrolytic copper foil current collector having a thickness of 2 μm to 20 μm; forming an anode active material layer by applying an anode active material including lithium powder on the electrolytic copper foil current collector; and providing a protective layer by performing silane coupling processing on the anode active material layer by using a silane coupling agent, in which a thickness of the anode active material layer and the protective layer provided on the electrolytic copper foil current collector is 100 μm or less.

The method may further include rolling after the providing of the protective layer.

According to still another aspect of the present invention, exemplary embodiments of the present invention include a lithium secondary battery including: a cathode including a lithium compound; an anode for the secondary battery including an anode active material layer, which is provided so as to face the cathode, is provided on the electrolytic copper foil current collector, and includes lithium powder, and a protective layer, which is provided while being coated on the anode active material layer; a separator interposed between the cathode and the anode; and a liquid electrolyte or a polyelectrolyte, in which a thickness of the electrolytic copper foil current collector is 2 μm to 20 μm, and a thickness of the anode active material layer and the protective layer provided on the electrolytic copper foil current collector is 100 μm or less.

[Advantageous Effects]

According to the present invention, it is possible to obtain a lithium secondary battery having characteristics, such as an excellent energy density and electromotive force, which are obtained when a lithium metal is used as an anode, and having excellent cycling efficiency and safety.

Further, even though the anode for the secondary battery according to the present invention includes lithium powder, the anode has excellent safety in a charging/discharging process and has a little change in a resistance value according to time to improve an interface characteristic, and dendrite is suppressed from being grown to improve a lifespan.

In addition, the present invention provides a new anode active material including lithium powder, so that it is possible to improve lifespan and capacity characteristics and manufacture an anode with a large width to improve process efficiency, and the anode active material is applicable as energy sources of various electronic devices.

[Description of Drawings]

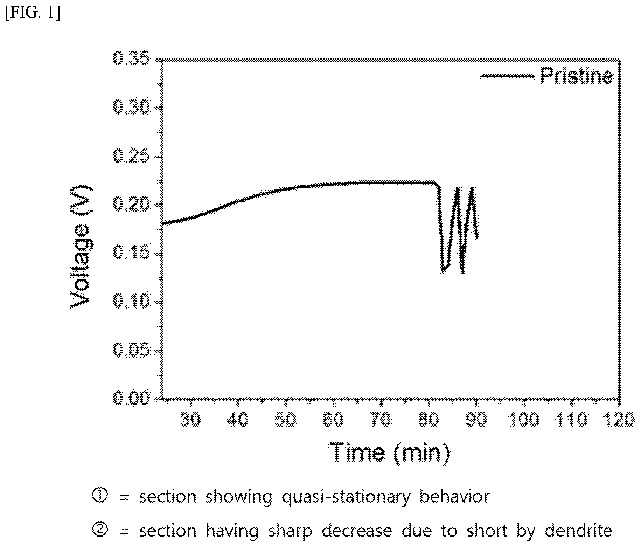

FIG. 1 is a graph explaining a sand time in the present invention.

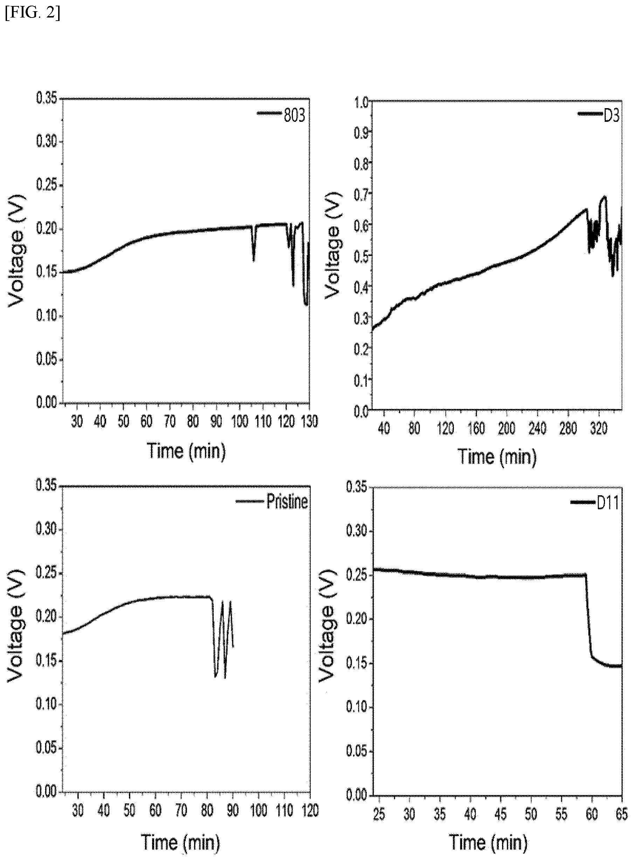

The first row of FIG. 2 represents Examples 1 and 2 according to an exemplary embodiment of the present invention sequentially, and the second row of FIG. 2 represents data illustrating Comparative Examples 1 and 2 according to the exemplary embodiment of the present invention.

FIG. 3 represents a result of an analysis of an anode active material layer according to the exemplary embodiment of the present invention.

FIG. 4A is a picture of a state of an anode active material layer before rolling observed by a scanning optical microscope according to the exemplary embodiment of the present invention.

FIG. 4B is a picture of a state of an anode active material layer after rolling observed by a scanning optical microscope according to the exemplary embodiment of the present invention.

FIG. 5 represents data showing a systematic cycling test performed under the conditions of Examples 1 and 2 and Comparative Example 1 according to the exemplary embodiment of the present invention.

FIG. 6 represents data showing a systematic cycling test performed under the conditions of Comparative Examples 2 and 3 according to the exemplary embodiment of the present invention.

[Best Mode]

Other specific matters of the exemplary embodiment are included in the detailed description and the drawings.

Advantages and characteristics of the present invention, and a method for achieving them will be clear when exemplary embodiments described in detail with reference to the accompanying drawings are referred to. However, the present invention is not limited to exemplary embodiments disclosed herein but will be implemented in various forms, and in the description below, when it is described that an element is "coupled" to another element, the element may be "directly coupled" to another element or "coupled" to another element through a third element. Further, in the drawing, a part irrelevant to the present invention is omitted for clearness of the description of the present invention, and like reference numerals designate like elements throughout the specification.

Hereinafter, the present invention will be described with reference to the accompanying drawings.

An anode for a secondary battery according to an exemplary embodiment of the present invention includes: an electrolytic copper foil current collector; an anode active material layer provided on one surface or both surfaces of the electrolytic copper foil current collector, and including lithium powder; and a protective layer provided on the anode active material layer, in which a thickness of the electrolytic copper foil current collector is 2 $\mu$m to 20 $\mu$m, and a thickness of the anode active material layer and the protective layer provided on the electrolytic copper foil current collector is 100 $\mu$m or less. Further, the anode for the secondary battery is provided in a sheet type having a short axis and a long axis, and an average length (width) of the short axis may be 150 mm to 2,000 mm.

The anode for the secondary battery of the present invention may further include the anode active material layer and the protective layer which are sequentially provided on the electrolytic copper foil current collector. The anode active material layer may include lithium powder, and the protective layer is provided on the anode active material layer, so that it is possible to further improve safety and lifespan characteristics of the anode active material.

In general, as a material of the existing anode for the secondary battery, a carbon material is used, but in the case of the carbon material, a theoretical capacity is 360 mAh/mg, and a lithium secondary battery using the anode for the secondary battery has the capacity per volume of 600 Wh/L and 250 Wh/kg. In the case where the carbon material is used as the anode material of the secondary battery, in order to increase the theoretical capacity to a level of 1/10 of 3,860 mAh/g, which is a theoretical capacity of lithium, by using the carbon material, a method of increasing a mixture density or a thickness of the anode may be used. In the meantime, there is a limitation in increasing the mixture density of the anode for the secondary battery in a process, and further, a thickness of the anode is generally demanded for 50 $\mu$m to 100 $\mu$m, so that there is a limitation in increasing the thickness. Accordingly, when the existing carbon material is used as the material of the anode for the secondary battery, there is a problem in that it is difficult to implement a secondary battery having a high capacity.

In the case where a lithium metal is used as a material of an anode of a primary battery, which does not perform irreversible charging/discharging, in the form of a thin film, the lithium metal is relatively light and has a high theoretical capacity, and has a low oxidation/reduction potential among the metals, thereby implementing an anode for a secondary battery having a high capacity. The lithium metal reacts with an electrolyte formed of an organic solvent to form a Solid Electrolyte Interphase (SEI) film on a surface of the lithium metal, and an additional side reaction with the electrolyte and the like is suppressed by the SEI film, so that the lithium metal may be stably used as the anode of the primary battery.

In the meantime, in the case where the lithium metal having the foregoing characteristic is used as the material of the anode for the secondary battery which performs reversible charging/discharging, a heating reaction of the lithium metal precipitated during the charging process with the electrolyte degrades safety of the secondary battery, and further, a new SEI film is formed in the repeated charging process. Accordingly, a part of the lithium precipitated on the surface of the anode is surrounded by an insulating film and cannot be used for electrochemical charging/discharging, so that there is a problem in that discharging capacity efficiency is sharply degraded. In addition, dendrite is grown on the surface due to the nonuniform precipitation of lithium in the reversible charging/discharging process in the secondary battery, and the dendrite causes an internal short-circuit of the secondary battery and may cause an explosion of the secondary battery in severe cases.

When lithium metal foil is used as the anode for the secondary battery in the related art, it is difficult to provide the lithium metal foil in the form of rolled foil, so that there are disadvantages in that a width of the lithium metal foil is limited to 200 mm or less and thus it is difficult to manufacture the anode having a large width, and it is impossible to provide the anode having a thickness of 100 $\mu$m or less. When lithium metal foil having a thickness of more than 100$\mu$m is used, an N/P ratio is 20 or more, so that there is a problem in safety in the charging/discharging process of the secondary battery, and due to a thickness of the lithium metal foil that does not participate in a substantial capacity of the secondary battery, there is a problem of inefficient internal space use of the secondary battery and resources are unnecessarily wasted to cause an increase in production cost.

Meanwhile, the anode for the secondary battery according to the exemplary embodiment of the present invention includes the anode active material layer including lithium powder. According to the use of the lithium powder as the material of the anode, a current density is decreased and thus it is possible to suppress dendrite from being formed on the surface, and it is possible to prevent an internal short-circuit of the secondary battery by the suppression of the formation of the dendrite. In addition, the anode for the secondary battery according to the exemplary embodiment of the present invention includes lithium powder in the anode active material layer, so that it is possible to provide the anode having a large width and it is possible to freely control a thickness, thereby easily implementing a high-capacity secondary battery having improved capacity characteristic and lifespan characteristic, and reducing manufacturing cost and improving process efficiency.

In the anode for the secondary battery according to the exemplary embodiment of the present invention, a total thickness of the anode active material layer including the lithium powder and the protective layer provided on the anode active material layer is 100 $\mu$m or less, which is smaller than that of the related art. Further, the anode for the secondary battery is provided in the type of sheet having a short axis and a long axis, and an average length of the short axis that is a width may be 150 mm to 2,000 mm, so that it is possible to provide the anode having a large width and the anode is applicable to high-capacity secondary batteries having various forms. Preferably, the thickness of the anode active material layer and the protective layer may be 20 $\mu$m to 100 $\mu$m. In the anode for the secondary battery, an NP ratio (an anode capacity per unit area/a cathode capacity per unit area) is 18 or less, and preferably, the NP ratio (an anode capacity per unit area/a cathode capacity per unit area) may be 3.5 to 18.0.

When the thickness of the anode active material layer and the protective layer laminated on the electrolytic copper foil current collector is less than 20 $\mu$m, electrical capacity efficiency providable by the anode active material layer is low to cause a problem, and when the thickness of the anode active material layer and the protective layer laminated on the electrolytic copper foil current collector is 100 $\mu$m, the N/P ratio has a value larger than 19 for the cathode including a lithium compound corresponding to the anode in the anode for the secondary battery using lithium powder, so that in the process of the progress of the charging/discharging, a phenomenon, such as surface precipitation, is generated in the secondary battery, to which the anode for the secondary battery is applied, to cause an internal short-circuit.

When the N/P ratio is 3.5, it may be advantageous in safety, but a capacity per unit area of the secondary battery is decreased, and when the N/P ratio is larger than 18, in the process of the progress of the charging/discharging, a phenomenon, such as surface precipitation, is generated in the secondary battery, to which the anode for the secondary battery is applied, to cause an internal short-circuit.

Further, a thickness of the electrolytic copper foil current collector of the anode for the secondary battery may be 2 $\mu$m to 20 $\mu$m, and when the thickness of the electrolytic copper foil current collector of the anode for the secondary battery is less than 2 $\mu$m, resistance of the current collector is increased and handling is difficult in a manufacturing process to degrade process efficiency. In addition, when the thickness of the electrolytic copper foil current collector of the anode for the secondary battery is 20 $\mu$m or less, the electrolytic copper foil current collector sufficiently plays a role of supporting the anode active material layer and the protective layer, so that when the thickness of the electrolytic copper foil current collector is larger than 20 $\mu$m, production cost is unnecessarily increased, it is difficult to secure a space within the secondary battery, and a capacity securable per unit area is decreased to cause a problem.

The anode active material layer and the protective layer may be coated on the electrolytic copper foil current collector and then rolling-processed, and in this case, a ratio of a thickness of the anode active material layer and the protective layer after the rolling process to a thickness of the anode active material layer and the protective layer before the rolling process may be 20% to 90%. When a total thickness of the anode active material layer and the protective layer before the rolling process is less than 20% of a total thickness of the anode active material layer and the protective layer after the rolling process, pressure applied to the lithium powder in the rolling process is excessively large to partially transform a shape or decrease a movement path of charge, thereby degrading charging/discharging efficiency. Further, when the total thickness of the anode active material layer and the protective layer before the rolling process is more than 90% of the total thickness of the anode active material layer and the protective layer after the rolling process, a contact area between the lithium powder is not sufficient to increase resistance and degrade electric efficiency, and a problem in that the anode active material layer including lithium powder is separated on the electrolytic copper foil current collector and the like is generated to degrade production efficiency of the secondary battery.

In the case of the anode active material layer using only lithium powder in the related art, a contact area between the lithium powder is small, so that when the anode active material layer is used as an electrode, resistance is large to cause a problem. In order to solve the problem, a conductive material and the like is mixed with the lithium powder for use in the related art, but the case where the conductive material and the like is mixed with the lithium powder has larger resistance than that of the case where lithium metal foil is used as an anode as it is, thereby causing a problem.

In the meantime, the anode active material according to the present exemplary embodiment may be manufactured by preparing slurry by using only lithium powder without using a conductive material and the like, and then coating the slurry on the electrolytic copper foil current collector, and rolling the slurry. In addition, the anode for the secondary battery adopts rolling, so that it is possible to maintain a contact area between the lithium powder forming the anode active material in a predetermined range, thereby decreasing resistance. In the meantime, in the case where general copper foil is used in a current collector, it is impossible to secure mechanical strength within a predetermined range and an effect of collecting charge by a relation with the anode active material layer including lithium powder, so that the electrolytic copper foil current collector described below is used.

The electrolytic copper foil current collector according to the present exemplary embodiment has tensile strength of 30 kgf/mm² (1 kgf/mm² = 9,80665 MPa) at a room temperature, and tensile strength of the electrolytic copper foil current collector after the electrolytic copper foil current collector is maintained at a temperature of 140°C for six hours may be 20 kgf/mm² or more. Preferably, room-temperature tensile strength of the electrolytic copper foil current collector is 30 kgf/mm² to 50 kgf/mm², and high-temperature tensile strength of the electrolytic copper foil current collector after the electrolytic copper foil current collector is maintained at a temperature of 140°C for six hours is 20 kgf/mm² to 50 kgf/mm².

When the tensile strength of the electrolytic copper foil current collector at a room temperature is less than 30 kgf/mm² and the tensile strength of the electrolytic copper foil current collector after the electrolytic copper foil current collector is maintained at a temperature of 140°C for six hours is less than 20 kgf/mm², the electrolytic copper foil current collector may be transformed in the process of rolling the anode for the secondary battery using the electrolytic copper foil current collector, when the tensile strength of the electrolytic copper foil current collector at a room temperature is larger than 50 kgf/mm² or the tensile strength of the electrolytic copper foil current collector at a high temperature is larger than 50 kgf/mm², hardness of the electrolytic copper foil current collector is increased to cause a problem in that the electrolytic copper foil current collector is broken during the rolling and the like, so that it is difficult to maintain the anode active material layer provided on the electrolytic copper foil current collector and current collecting efficiency is degraded.

Further, internal energy of the electrolytic copper foil current collector according to Formula 1 below is 0.3 kgf/mm to 8.5 kgf/mm (1 kgf/mm = 0,00980665 J).

[Formula 1]

$$\text{Internal energy (kgf/mm)} = \text{Tensile strength (kgf/mm}^2) \times \text{Elongation percentage (\%)} \times \text{Thickness (mm)}$$

A thickness of the electrolytic copper foil current collector may be 2 μm to 20 μm, and when the thickness of the electrolytic copper foil current collector is decreased, there is an advantage in that it is possible to increase a capacity per volume in the anode for the secondary battery, but internal energy is decreased at the same time to cause a problem. The internal energy is a value related to tensile strength, an elongation percentage, and a thickness as expressed in Formula 1, and only when the internal energy is larger than 0.3 kgf/mm, the electrolytic copper foil current collector may be maintained without being broken during the coating the anode active material or rolling.

Preferably, the thickness of the anode active material layer and the protective layer may be 20 μm, and a capacity of the anode active material layer and the protective layer may be 4.2 mAh/cm² or more. In general, in the case where graphite is used as the anode for the secondary battery, when the thickness of the anode for the secondary battery is 60 μm or more, a capacity of 3.3 mAh/cm² is provided for graphite of 1.7 g/ cm³. In the meantime, the anode for the secondary battery according to the present invention may provide a larger capacity with a smaller thickness than that of graphite in the related art.

In another method, surface roughness may be provided on a single surface or both surfaces of the electrolytic copper foil current collector, and the anode active material layer may be provided on the surface provided with the surface roughness in the electrolytic copper foil current collector. The surface roughness may be provided by roughening processing which forms unevenness by attaching fine copper particles and the like in the process of manufacturing the electrolytic copper foil current collector. The electrolytic copper foil current collector provides an anchoring effect to the anode active material layer provided on the electrolytic copper foil current collector by the roughening processing, so that it is possible to improve a contact with the anode active material layer including lithium powder and current collecting efficiency of charge.

An average grain size of the lithium powder may be 5 μm to 250 μm, and preferably, 10 μm to 60 μm. When the average grain size of the lithium powder is less than 5 μm, the particle of the lithium powder is excessively small, so that it is difficult to coat the lithium powder on the electrolytic copper foil current collector, and when the average grain size of the lithium powder is larger than 250 μm, a movement path of charge is increased, so that a capacity is decreased.

The anode active material layer may further include a binder together with the lithium powder. A weight ratio of the lithium powder and the binder in the anode active material layer is 90 : 10 to 99.5 : 0.5. When the weight ratio of the binder to the lithium powder is smaller than the foregoing range, a settlement effect of the lithium powder by the binder is not sufficient, so that in the case where the anode active material layer is coated on the electrolytic copper foil current collector, a problem may arise such that a part of the anode active material layer is removed during a drying process, and when the weight ratio of the binder to the lithium powder is larger than the foregoing range, a content of lithium powder providable per volume is decreased to decrease a capacity.

As the binder, a synthetic rubber-based binder is preferable, and particularly, for example, styrene butadiene rubber, nitrile butadiene rubber, methyl acrylate butadiene rubber, and the like may be solely used or two or more of styrene, butadiene, rubber, nitrile butadiene rubber, methyl acrylate butadiene rubber, and the like may be mixed and used, and preferably, styrene butadiene-based synthetic rubber may be used.

The anode for the secondary battery may further include the protective layer after the anode active material layer is coated on the electrolytic copper current collector. For example, the protective layer may be formed by silane coupling processing by using one or more silane coupling agents selected from methyltrimethoxysilane, tetraethoxysilane, 3-glycidoxypropyl trimethoxysilane, 2-(3,4-epoxycyclohexyl)etyltrimethoxysilane, 3-aminopropyl trimethoxysilane, N-2-(aminoethyl)-3-aminopropyl trimethoxysilane, N-2-(aminoethyl)-3-aminoprophylmethyl demethoxysilane, vinyl trimethoxysilane, vinyl phenyl trimethoxysilane, vinyltris(2-methoxyethoxy)silane, 3-acryloxypropyl trimethoxysilane, 3-methacryloxypropyl trimethoxysilane, 3-mercaptopropyltrimethoxysilane, dimethylchlorosilane, methyldichlorosilane, methyltrichlorosilane, phenyltrichlorosilane, trichlorosilane, trimethylchlorosilane, silicon tetrachloride, and vinyltrichlorosilane. Preferably, the protective layer may be formed by coating the anode active material layer with a trimethoxy silane-based coupling agent solely or a composition including the trimethoxy silane-based coupling agent and an inorganic material. In addition, the protective layer may include a silicon atom (Si) of 1 atom% or more in an Energy Dispersive X-ray (EDX) spectrometer analysis. In the case of the anode for the secondary battery according to the present exemplary embodiment, the silane coupling agent having a trimethyloxy functional group is provided as the protective layer, thereby improving efficiency of suppressing lithium dendrite from being formed on the surface of the anode active material layer including the lithium powder.

A sand time of the secondary battery to which the anode for the secondary battery according to the present invention is applied at a current density of 10 mA/cm$^2$ is 100 minutes or longer, and a potential value of the secondary battery is 0.2 V to - 0.2 V for 60 hours after the anode active material layer of the anode for the secondary battery is rolling-processed and subjected to a systematic cycling test. The sand time of 100 minutes or longer is provided like the foregoing range, so that it is possible to increase a time in which dendrite is formed on the surface of the anode for the secondary battery during the high-speed charging of the secondary battery, and thus it is possible to improve efficiency of the charging/discharging cycle of the secondary battery. Further, by maintaining the potential value within the foregoing range even after 60 hours after the cycling test of the anode for the secondary battery, it can be checked that in the anode for the secondary battery, the dendrite is suppressed from being formed on the surface of the anode for the secondary battery even after the cycling test of the anode for the secondary battery.

According to another aspect of the present invention, the present invention includes a method of manufacturing an anode for a secondary battery, the method including: preparing an electrolytic copper foil current collector having a thickness of 2 μm to 20 μm, forming an anode active material layer by applying an anode active material including lithium powder on the electrolytic copper foil current collector; and providing a protective layer on the anode active material layer through silane coupling processing using a silane coupling agent, in which a thickness of the anode active material layer and the protective layer provided on the electrolytic copper foil current collector is 100 μm or less.

The method of manufacturing the anode for the secondary battery may further include rolling after the providing of the protective layer. A thickness of the anode active material layer and the protective layer provided on the electrolytic copper foil current collector after the rolling process is 20% to 90% of a thickness of the anode active material layer and the protective layer provided on the electrolytic copper foil current collector before the rolling process.

Room-temperature tensile strength of the electrolytic copper foil current collector is 30 kgf/mm$^2$ to 50 kgf/mm$^2$ (294,2 MPa to 490,3 MPa), and high-temperature tensile strength of the electrolytic copper foil current collector after the electrolytic copper foil current collector is maintained at a temperature of 140°C for six hours is 20 kgf/mm$^2$ to 50 kgf/mm$^2$ (196,1 MPa to 490,3 MPa). Further, internal energy of the electrolytic copper foil current collector according to Formula 1 below is 0.3 kgf/mm to 8.5 kgf/mrr (0,00294 J to 0,0836 J).

[Formula 1]

$$\text{Internal energy (kgf/mm)} = \text{Tensile strength (kgf/mm}^2) \times \text{Elongation percentage (\%)} \times \text{Thickness (mm)}$$

The electrolytic copper foil current collector may be provided with a thickness of 2 μm to 20 μm. As described above, the thickness of the electrolytic copper foil current collector supporting the anode active material layer and the protective layer is small, so that the electrolytic copper foil current collector may be transformed by external force in the rolling process. In this case, by maintaining the room-temperature tensile strength and the high-temperature tensile strength of the electrolytic copper foil current collector within the foregoing ranges, it is possible to prevent the shape of the electrolytic copper foil current collector from being transformed or being cracked/broken in the rolling process, and prevent the shape of the electrolytic copper foil current collector from being transformed before and after the rolling. Further, by maintaining the internal energy of the electrolytic copper foil current collector according to Formula 1 within the range of 0.3 kgf/mm to 8.5 kgf/mm, the electrolytic copper foil current collector may maintain predetermined strength without being transformed by external force applied in the process of manufacturing the anode for the secondary battery.

The protective layer may include a silicon atom (Si) of 1 atom% or more in an EDX spectrometer analysis. The anode active material layer may include lithium powder, and the protective layer provided on the anode active material layer may be formed by using a trimethoxy silane-based coupling agent.

By using the lithium powder as the anode active material layer, it is possible to decrease a total thickness of the anode and provide the anode for the secondary battery in the form of a sheet having a wide width at the same time. Further, by providing the protective layer on the surface of the anode active material layer, it is possible to prevent dendrite from being formed on the surface and improve lifespan and safety characteristics.

According to still another aspect of the present invention, the present invention includes a lithium secondary battery including a cathode including a lithium compound; an anode for a secondary battery formed of an anode active material layer, which is provided so as to face the cathode, is provided on an electrolytic copper foil current collector, and includes lithium powder, and a protective layer provided while being coated on the anode active material layer; a separator interposed between the cathode and the anode; and a liquid electrolyte or a high-molecular electrolyte, in which a thickness of the electrolytic copper foil current collector is 2 $\mu$m to 20 $\mu$m, and a thickness of the anode active material layer and the protective layer provide don the electrolytic copper foil current collector is 100 $\mu$m or less.

In the anode for the secondary battery, an NP ratio (an anode capacity per unit area/a cathode capacity per unit area) is 18 or less, and preferably, the NP ratio (an anode capacity per unit area/a cathode capacity per unit area) between the anode and the cathode may be 3.5 to 18.0. When the N/P ratio is larger than 18, the secondary battery may be internally short-circuited in the process of charging/discharging the secondary battery, thereby arising a problem in safety.

A sand time is 100 minutes or longer when a current density of the secondary battery is 10 mA/cm$^2$, and a potential value of the secondary battery is 0.2 V to - 0.2 V even after 60 hours after the anode active material layer is rolling-processed and subjected to a systematic cycling test.

Even though the secondary battery according to the present exemplary embodiment includes the anode active material layer formed by coating the lithium powder on the electrolytic copper foil current collector, the sand time is 100 minutes or longer and the potential value is 0.2 V to - 0.2 V for 60 hours after the performance of the cycling test, so that it is possible to suppress dendrite from being formed on the surface of the anode.

In addition, a thickness of the anode active material layer and the protective layer may be 20 $\mu$m to 100 $\mu$m, and particularly, the thickness of the anode active material layer and the protective layer may be 20 $\mu$m and a capacity may be 4.2mAh/cm$^2$ or more. In the lithium secondary battery according to the present exemplary embodiment, it is possible to decrease the thickness of the anode active material layer and the protective layer forming the anode to 100 $\mu$m or less, so that a capacity providable per volume is increased and thus the lithium secondary battery is variously applicable to an electronic device requiring a high-capacity energy source.

Hereinafter, the Examples of the present invention and the Comparative Examples will be described. However, the Examples are simply the preferable examples of the present invention, and the scope of the present invention is not limited by the Examples below.

1. Manufacturing and evaluation of lithium secondary battery

Lithium secondary batteries were manufactured by using a liquid electrolyte and a LiMn$_2$O$_4$ cathode together with the anodes manufactured according to the Examples and the Comparative Examples.

In order to manufacture a cathode, polyvinylidene fluoride (PVdF) used as a binder was completely melted in N-methylpyrrolidone (NMP) to prepare a mixed solution, and then super-P carbon, which is a conductive material, was quantitatively added to the mixed solution and stirred. A completely mixed slurry solution was applied on aluminum foil, which is a cathode current collector, and was dried, and then a lamination process was performed by using a roll press. The foregoing process was performed in order to improve mutual bonding force between the cathode active material/conductive material/binder, and effectively bond the materials to the aluminum foil which is the current collector. When a compression process is terminated, an electrode having an appropriate size was manufactured through a cutting process and dried in a vacuum oven of 110°C for 24 hours or longer.

As represented in Table 2 below, as the anodes, the anode in which lithium metal foil was used as it is was manufactured in Comparative Example 1, the anodes in which an anode active material layer was formed by coating lithium powder on copper foil (a copper current collector) that is an anode current collector, a silane treatment was performed on the anode active material layer, and a protective layer was laminated were manufactured in Examples 1 to 4, and the anodes in which only an anode active material layer was formed by coating lithium powder on a copper current collector were manufactured in Comparative Examples 2 and 3.

As an electrolyte, a material obtained by dissolving $LiPF_6$ of 1.15 M in a mixed solvent of ethylene carbonate and dimethyl carbonate (a volumetric ratio is 50/50) was used, and as a separation film, Asahi Kasei ND420 was used.

Each electrode was prepared in a dry room, and a lithium secondary battery was manufactured within a glove box in which argon atmosphere was maintained. A charging/discharging cycle of the manufactured cell (lithium secondary battery) was progressed within a voltage range of 3.0 V to 4.2 V at 0.5 Crate.

2. Evaluation of sand time

Sand time of the lithium metal of which a surface was variously treated at a current density of 10 mA/cm2 was measured and the measurement results of the Examples and the Comparative Examples are represented (see FIGS. 1 and 2). The sand time was evaluated in order to measure an effect of the silane layer that is the protective layer.

In order to remove impurities on the surface of the lithium metal, cleaning was performed for three minutes by putting the lithium metal into pentane or hexane which is an alkanes material, and then the lithium metal was dipped in a silane coupling agent solution based on trimethoxy silane for 20 seconds to coat the surface of the lithium metal. After the coating, the lithium metal was dried within the glove box for 24 hours.

A battery in the form of a coin cell was manufactured by using the surface-treated lithium metal as a working electrode and the lithium metal on which the surface treatment was not performed as a counter electrode, and then the sand time of the battery was measured. The measurement was progressed at a current density of 10 mA/cm2.

The surface-treated lithium metals faced as the working electrode and the counter electrode and then a symmetric battery in the form of a coin cell was manufactured, and an analysis of Li/Li symmetric cell was performed at a uniform current density.

3. Manufacture the anode active material layer (lithium powder)

In the manufacturing of the anode active material layer, poly(vinylidene fluoride) (PVdF) was used as a binder, and N-methylpyrrolidinone (NMP) was used as a solvent. A weight ratio (wt%) of the lithium powder (Stabilized Lithium Metal Powder) and the binder in the solvent was 95 : 5 and a solid content of the electrode slurry was adjusted to 35 to 40%.

The mixing was performed by using a vortex mixer, and as the coating, a doctor blade method or coaters, such as gravure, a slot die, and a comma, may be utilized, but among them, the coating process was performed by using the doctor blade method. In this case, after the slurry was coated by using the electrolytic copper foil current collector, rolling was performed within the glove box by using a rolling roll. A thickness of the anode active material layer after the rolling processing was 70% of a thickness of the anode active material layer before the rolling processing.

4. Form the protective layer (silane treatment)

After the anode active material layer was manufactured by using the lithium powder, the anode active material layer coated on the electrolytic copper foil current collector was dipped in a silane coupling agent solution based on trimethoxy silane for 20 seconds to coat the surface of the anode active material layer. After the coating, the electrolytic copper foil current collector was dried within the glove box for 24 hours.

In this case, as the silane coupling agents, N-(2-aminoethyl)-3-aminopropyl trimethoxy silane, 3-glycidoxypropyltrimethoxysilane, methyltrimethoxysilane, tetraethoxysilane, and the like may be used, and in the present exemplary embodiment, tetraethoxysilane was used.

5. Example 1

In the manufacturing of an anode provided with an anode active material layer using lithium powder, poly(vinylidene fluoride) (PVdF) was used as a binder, and N-methylpyrrolidinone (NMP) was used as a solvent. In this case, slurry was prepared by adding the lithium powder and the binder to NMP that is the solvent with a weight ratio of the lithium powder and the binder of 95 : 5. A solid content of the electrode slurry was adjusted to 35 to 40%. Subsequently, the prepared slurry was mixed by using the vortex mixer, and the coating process was performed on a surface of the electrolytic copper foil current collector by using the doctor blade method. After the coating, rolling was performed within the glove box by using a rolling roller.

A thickness of the anode active material layer, which is the lithium powder, was made to be 90 $\mu$m after the rolling, and a thickness of the electrolytic copper foil, which is the current collector, was 20 $\mu$m, and tensile strength of the electrolytic copper foil was 35 kgf/mm2. After the anode was manufactured by using the lithium powder, in the silane coupling agent processing, the electrolytic copper foil current collector provided with the anode active material layer was dipped in a silane coupling agent solution based on trimethoxy silane for 20 seconds to coat the surface of the electrolytic copper foil current collector . After the coating, the lithium metal was dried within the glove box for 24 hours. With the lithium powder electrode, a symmetric cycling test was performed under the condition below.

Cell type: 2032 coin cell
Cathode: Lithium powder active material electrode (FMC Corporation) (Φ12)
Anode: Lithium powder active material electrode (FMC Corporation) (Φ15)
Separator: PE separator (ND420, Asahi Kasei) (Φ18)
Electrolyte: EC:EMC = 1.15 M LiPF$_6$ in 3:7(v:v)
Cell charging/discharging condition
Current: $\pm$ 0.53 mA/cm$^2$
Cycling test: Charging 0.53 mA/cm$^2$ (30 min), rest (10 min), discharging 0.53 mA/cm$^2$ (30 min)

The sand time of the battery was measured after manufacturing the cell in the form of a coin cell by performing a surface treatment with silane in the coin cell under the condition of the symmetric cycling test as described above and using the anode including the lithium powder anode active material layer formed with the protective layer as a working electrode and using lithium metal, on which a surface treatment is not performed, as a counter electrode. The measurement was progressed at a current density of 10 mA/cm$^2$.

6. Examples 2, Example 3, and Example 4

As represented in Tables 1 and 2, experiments of Examples 2 to 4 were carried out in the same manner as in Example 1 except for a thickness of the lithium powder active material electrode and a thickness and tensile strength of the electrolytic copper foil current collector (copper current collector) which is the current collector.

7. Comparative Example 1

As represented in Tables 1 and 2, the experiment was carried out by using existing lithium metal foil as an anode.

8. Comparative Examples 2 and 3

As represented in Tables 1 and 2, the experiments were carried out with different thicknesses without rolling the anode including the lithium powder anode active material layer of Example 1.
FIG. 1 is a graph explaining a sand time in the present invention. The first row of FIG. 2 represents Examples 1 and 2 according to an exemplary embodiment of the present invention sequentially, and the second row of FIG. 2 represents data illustrating Comparative Examples 1 and 2 according to the exemplary embodiment of the present invention. More particularly, it can be seen that in Comparative Examples 1 and 2 according to the exemplary embodiment of the present invention, a voltage is 80 V or less, and in Examples 1 and 2, a voltage of 90 V or more based on the cathode of 1.06 mAh/cm$^2$, and means a potential value for 60 hours after this derived.

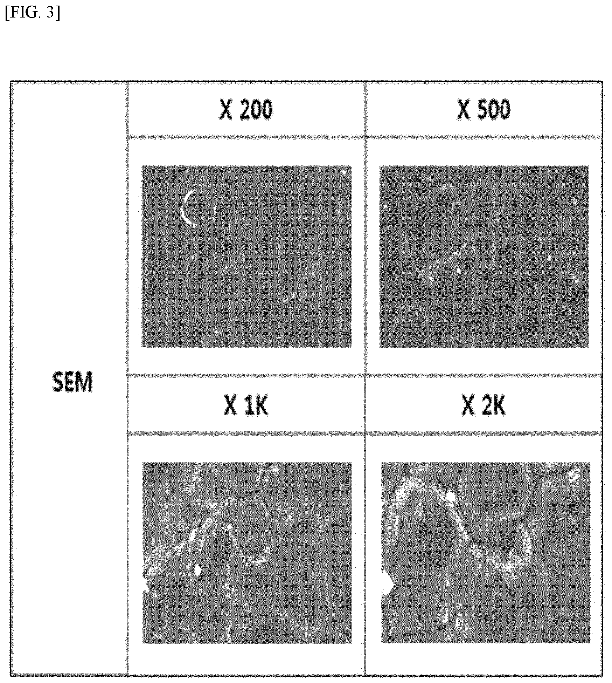

FIG. 3 represents a result of an analysis of the anode active material layer according to the exemplary embodiment of the present invention.

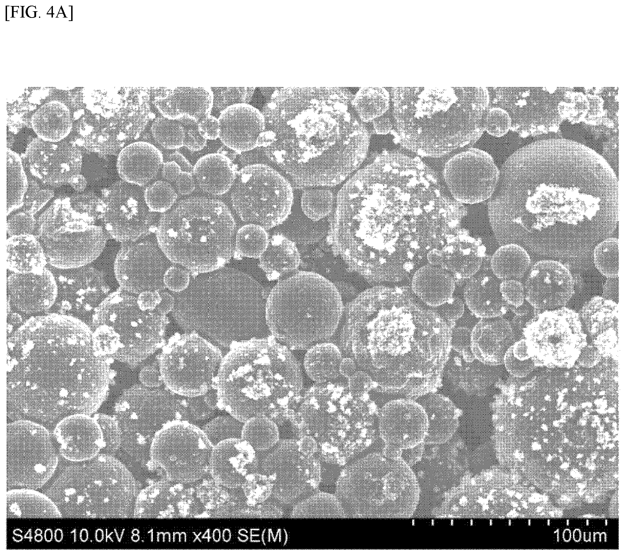

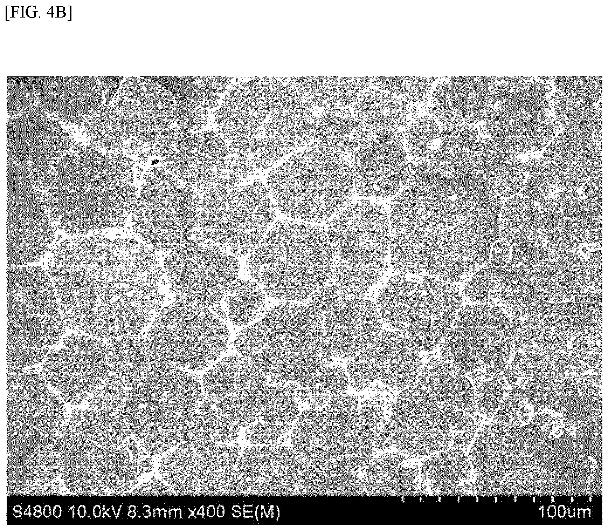

FIG. 4A is a picture of a state of the anode active material layer before rolling observed by a scanning optical microscope according to the exemplary embodiment of the present invention, and FIG. 4B is a picture of a state of the anode active material layer after rolling observed by a scanning optical microscope according to the exemplary embodiment of the present invention.

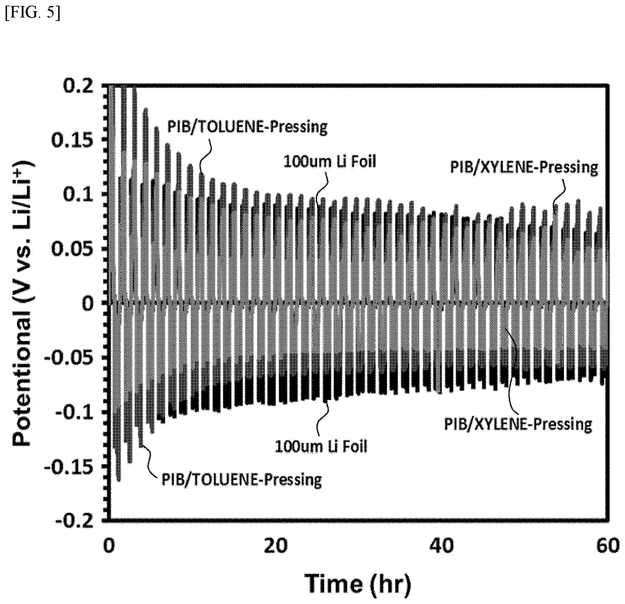

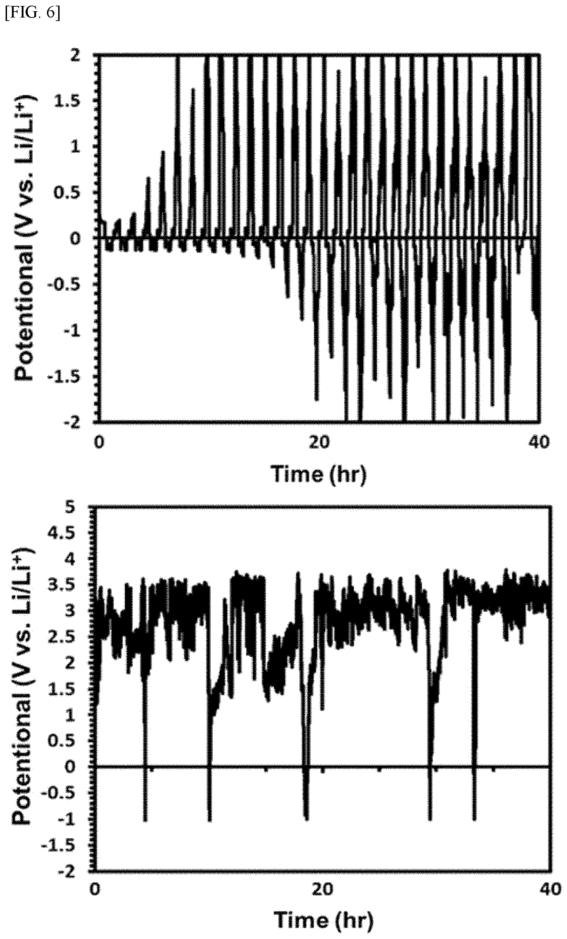

FIG. 5 represents data showing a systematic cycling test performed under the conditions of Examples 1 and 2 and Comparative Example 1 according to the exemplary embodiment of the present invention, and FIG. 6 represents data showing a systematic cycling test performed under the conditions of Comparative Examples 2 and 3 according to the exemplary embodiment of the present invention.
Together with FIGS. 1 to 5, the contents of the Examples and the Comparative Examples of the present invention are represented in Table 1 for each experiment condition, and a result of each evaluation is represented in Table 2.
In Table 1, the lithium metal foil means the anode formed of only lithium metal, and the lithium powder anode active material layer means the layer formed by coating lithium powder on the copper current collector. Further, the silane treatment means the protective layer provided on the anode active material layer.
In Table 2, room-temperature tensile strength means tensile strength at a room temperature, and high-temperature tensile strength means tensile strength after the copper current collector, which is the electrolytic copper foil current collector, is maintained at 140°C for six hours and is dried. Further, internal energy means a value according to Formula 1 below. Further, the N/P ratio is a value based on the cathode of 1.06 mAh/cm$^2$, and means a potential value for 60 hours after the cycling test (symmetric cycling test) as a cycling test. The sand time was measured based on 100 mA/cm$^2$.

[Formula 1]

Internal energy (kgf/mm) = Tensile strength (kgf/mm$^2$) × Elongation percentage (%) × Thickness (mm)

[Table 1]

|  | Thickness (μm) of lithium metal foil | Thickness (μm) of lithium powder anode active material layer | Thickness (μm) of copper current collector | Silane treatment | Rolling |
|---|---|---|---|---|---|
| Example 1 | - | 90 | 20 | Yes | Yes |
| Example 2 | - | 40 | 8 | Yes | Yes |
| Example 3 | - | 60 | 10 | Yes | Yes |
| Example 4 | - | 20 | 4 | Yes | Yes |
| Comparative Example 1 | 100 | - | - | No | No |
| Comparative Example 2 | - | 110 | 5 | No | No |
| Comparative Example 3 | - | 150 | 5 | No | No |

[Table 2]

|  | Room-temperature tensile strength (kgf/mm$^2$) of copper current collector | High-temperature tensile strength (kgf/mm$^2$) of copper current collector | Internal energy (kgf/mm) | N/P ratio | Potential value (V) for 60 hours after cycling test | Sand time (min) |
|---|---|---|---|---|---|---|
| Example 1 | 35 | 28 | 8.4 | 17.5 | 0.2—0.2 | 120 |
| Example 2 | 42 | 39 | 2.6 | 7.78 | 0.2—0.2 | 304 |
| Example 3 | 55 | 23 | 1.5 | 11.67 | 0.2—0.2 | 200 |
| Example 4 | 48 | 40 | 0.38 | 3.89 | 0.2—0.2 | 107 |
| Comparative Example 1 | - | - | - | 19.45 | 0.2—0.2 | 82 |
| Comparative Example 2 | 35 | 20 | 0.24 | 21.39 | 2~-2 | 59 |
| Comparative Example 3 | 35 | 27 | 0.18 | 37.17 | 3~-3.5 | 65 |

Referring to the drawings and the Tables, when the protective layer was formed by using the silane coupling agent having the trimethoxy functional group like Examples 1 to 4, it was confirmed that dendrite was suppressed from being formed in the anode including the anode active material layer using lithium powder. In the meantime, when only the lithium powder was used without forming the protective layer like Comparative Examples 2 and 3, the sand time is short and the potential values after the cycling test were represented to be 2 to -2V to 3 to -3.5V, respectively, so that it was confirmed that the dendrite was formed on the surface of the anode to decrease a lifespan.

Further, in the case of Comparative Example 1 in which the lithium metal foil itself is used as the anode like the existing case, it was confirmed that the N/P ratio was large and the sand time was short. However, Comparative Example 1 has a limitation in rolling, so that in the case of a full cell which is not in the form of a coin cell as in the present experiment, the characteristic of the cell is expected to be degraded compared to that of the present experiment.

It will be understood by those skilled in the art that the scope of the present application is defined in the appended claims.

**Claims**

1. An anode for a secondary battery, the anode comprising:

   an electrolytic copper foil current collector;
   an anode active material layer which is provided on a single surface or both surfaces of the electrolytic copper foil current collector and includes lithium powder; and
   a protective layer provided on the anode active material layer, wherein the protective layer is a silane layer, wherein a thickness of the electrolytic copper foil current collector is 2 $\mu$m to 20 $\mu$m, and a thickness of the anode active material layer and the protective layer being provided and rolled on the electrolytic copper foil current collector is 20 $\mu$m to 100 $\mu$m,
   wherein the thickness of the anode active material layer and the protective layer after a rolling processing is 20% to 90% of the thickness of the anode active material layer and the protective layer before the rolling processing,
   wherein room-temperature tensile strength of the electrolytic copper foil current collector is 30 kgf/mm$^2$ to 50 kgf/mm$^2$ (294,2 MPa to 490,3 MPa), and high temperature tensile strength of the electrolytic copper foil current collector after the electrolytic copper foil current collector is maintained at a temperature of 140°C for six hours is 20 kgf/mm$^2$ to 50 kgf/mm$^2$ (196,1 MPa to 490,3 MPa),
   wherein internal energy of the electrolytic copper foil current collector according to Formula 1 below is 0.3 kgf/mm to 8.5 kgf/mm (0,00294 J to 0,0836 J).

   [Formula 1]

   $$\text{Internal energy (kgf/mm)} = \text{Tensile strength (kgf/mm}^2) \times \text{Elongation percentage (\%)} \times \text{Thickness (mm)}.$$

2. The anode of claim 1, wherein surface roughness is provided on the single surface or both surfaces of the electrolytic copper foil current collector, and the anode active material layer is provided on the surface provided with the surface roughness in the electrolytic copper foil current collector.

3. The anode of claim 1, wherein the anode active material layer includes lithium powder and a binder, and a weight ratio of the lithium powder and the binder is 90 : 10 to 99.5 : 0.5.

4. The anode of claim 1, wherein the protective layer includes a silicon atom (Si) of 1 atom% or more in an Energy Dispersive X-ray Spectrometer (EDX) spectrometer analysis.

5. The anode of claim 1, wherein the protective layer is formed by silane coupling processing by using one or more silane coupling agents selected from methyltrimethoxysilane, tetraethoxysilane, 3-glycidoxypropyl trimethoxysilane, 2-(3,4-epoxycyclohexyl)etyltrimethoxysilane, 3-aminopropyl trimethoxysilane, N-2-(aminoethyl)-3-aminopropyl trimethoxysilane, N-2-(aminoethyl)-3-aminoprophylmethyl demethoxysilane, vinyl trimethoxysilane, vinyl phenyl trimethoxysilane, vinyltris(2-methoxyethoxy)silane, 3-acryloxypropyl trimethoxysilane, 3-methacryloxypropyl trimethoxysilane, 3-mercaptopropyltrimethoxysilane, dimethylchlorosilane, methyldichlorosilane, methyltrichlorosilane, phenyltrichlorosilane, trichlorosilane, trimethylchlorosilane, silicon tetrachloride, and vinyltrichlorosilane.

6. The anode of claim 1, wherein the thickness of the anode active material layer and the protective layer is 20 μm, and a capacity is 4.2 mAh/cm$^2$ or more.

7. The anode of claim 1, wherein the anode is provided in a sheet type having a short axis and a long axis, and an average length (width) of the short axis is 150 mm to 2,000 mm.

8. The anode of claim 1, wherein an NP ratio (an anode capacity per unit area/a cathode capacity per unit area) is 18 or less.

9. The anode of claim 1, wherein when a current density of the secondary battery is 10 mA/cm$^2$, sand time is 100 minutes or longer.

10. The anode of claim 1, wherein a potential value measured 60 hours after a symmetric cycling test is 0.2 V to - 0.2 V, wherein the symmetric cycling test is performed by rolling the anode active material layer.


**Patentansprüche**

1. Anode für eine Sekundärbatterie, wobei die Anode Folgendes umfasst:

   einen Stromkollektor aus Elektrolytkupferfolie;
   eine Anodenaktivmaterialschicht, die auf einer einzelnen Fläche oder beiden Flächen des Stromkollektors aus Elektrolytkupferfolie bereitgestellt ist und Lithiumpulver beinhaltet;
   und
   eine Schutzschicht, die auf der Anodenaktivmaterialschicht bereitgestellt ist, wobei die Schutzschicht eine Silanschicht ist,
   wobei eine Dicke des Stromkollektors aus Elektrolytkupferfolie 2 μm bis 20 μm beträgt und eine Dicke der Anodenaktivmaterialschicht und der Schutzschicht, die auf dem Stromkollektor aus Elektrolytkupferfolie bereitgestellt und auf diesen aufgewalzt sind, 20 μm bis 100 μm beträgt,
   wobei die Dicke der Anodenaktivmaterialschicht und der Schutzschicht nach einer Walzbearbeitung 20 % bis 90 % der Dicke der Anodenaktivmaterialschicht und der Schutzschicht vor der Walzbearbeitung beträgt,
   wobei die Zugfestigkeit bei Raumtemperatur des Stromkollektors aus Elektrolytkupferfolie 30 kgf/mm$^2$ bis 50 kgf/mm$^2$ (294,2 MPa bis 490,3 MPa) beträgt,
   und die Zugfestigkeit bei hoher Temperatur des Stromkollektors aus Elektrolytkupferfolie, nachdem der Stromkollektor aus Elektrolytkupferfolie für sechs Stunden auf einer Temperatur von 140 °C gehalten wird, 20 kgf/mm$^2$ bis 50 kgf/mm$^2$ (196,1 Mpa bis 490,3 MPa) beträgt,
   wobei die innere Energie des Stromkollektors aus Elektrolytkupferfolie nach der nachstehenden Formel 1 0,3 kgf/mm bis 8,5 kgf/mm (0,00294 J bis 0,0836 J) beträgt.

[Formel 1]

$$\text{Innere Energie (kgf/mm)} = \text{Zugfestigkeit (kgf/mm}^2) \times \text{prozentuale Ausdehnung (\%)} \times \text{Dicke (mm)}.$$

2. Anode nach Anspruch 1, wobei eine Oberflächenrauhigkeit auf der einzelnen Fläche oder beiden Flächen des Stromkollektors aus Elektrolytkupferfolie bereitgestellt ist und die Anodenaktivmaterialschicht auf der Fläche bereitgestellt ist, die mit der Oberflächenrauhigkeit in dem Stromkollektor aus Elektrolytkupferfolie versehen ist.

3. Anode nach Anspruch 1, wobei die Anodenaktivmaterialschicht Lithiumpulver und ein Bindemittel beinhaltet, und ein Gewichtsverhältnis des Lithiumpulvers und des Bindemittels 90:10 bis 99,5:0,5 beträgt.

4. Anode nach Anspruch 1, wobei die Schutzschicht ein Siliziumatom (Si) von 1 Atom-% oder mehr in einer energiedispersiven Röntgenspektrometeranalyse (EDX-Spektrometeranalyse) beinhaltet.

5. Anode nach Anspruch 1, wobei die Schutzschicht durch Silanhaftbearbeitung unter Verwendung eines oder mehrerer Silanhaftmittel gebildet wird, die ausgewählt sind aus Methyltrimethoxysilan, Tetraethoxysilan, 3-Glycidoxypropyltrimethoxysilan, 2-(3,4-Epoxycyclohexyl)etyltrimethoxysilan, 3-Aminopropyltrimethoxysilan, N-2-(Aminoethyl)-3-aminopropyltrimethoxysilan, N-2-(Aminoethyl)-3-aminoprophylmethyldemethoxysilan, Vinyltrimethoxysilan, Vinylphenyltrimethoxysilan, Vinyltris(2-methoxyethoxy)silan, 3-Acryloxypropyltrimethoxysilan, 3-Methacryloxypropyltrimethoxysilan, 3-Mercaptopropyltrimethoxysilan, Dimethylchlorsilan, Methyldichlorsilan, Methyltrichlorsilan, Phenyltrichlorsilan, Trichlorsilan, Trimethylchlorsilan, Siliziumtetrachlorid und Vinyltrichlorsilan.

6. Anode nach Anspruch 1, wobei die Dicke der Anodenaktivmaterialschicht und der Schutzschicht 20 $\mu$m beträgt und eine Kapazität 4,2 mAh/cm$^2$ oder mehr beträgt.

7. Anode nach Anspruch 1, wobei die Anode als Blechtyp bereitgestellt ist, der eine kurze Achse und eine lange Achse aufweist, und eine mittlere Länge (Breite) der kurzen Achse 150 mm bis 2.000 mm beträgt.

8. Anode nach Anspruch 1, wobei ein NP-Verhältnis (eine Anodenkapazität pro Flächeneinheit/eine Kathodenkapazität pro Flächeneinheit) 18 oder weniger beträgt.

9. Anode nach Anspruch 1, wobei, wenn eine Stromdichte der Sekundärbatterie 10 mA/cm$^2$ ist, die Sand-Zeit 100 Minuten oder länger ist.

10. Anode nach Anspruch 1, wobei ein Potenzialwert, der 60 Stunden nach einem symmetrischen Zyklisierungstest gemessen wird, 0,2 V bis -0,2 V beträgt, wobei der symmetrische Zyklisierungstest durch Walzen der Anodenaktivmaterialschicht durchgeführt wird.

**Revendications**

1. Anode pour une batterie secondaire, l'anode comprenant :

un collecteur de courant en feuille de cuivre électrolytique ;
une couche de matériau actif d'anode qui est prévue sur une seule surface ou les deux surfaces du collecteur de courant en feuille de cuivre électrolytique et inclut une poudre de lithium ; et
une couche protectrice prévue sur la couche de matériau actif d'anode, dans laquelle la couche protectrice est une couche de silane,
dans laquelle une épaisseur du collecteur de courant en feuille de cuivre électrolytique est de 2 $\mu$m à 20 $\mu$m, et une épaisseur de la couche de matériau actif d'anode et de la couche protectrice prévues et laminées sur le collecteur de courant en feuille de cuivre électrolytique est de 20 $\mu$m à 100 $\mu$m,
dans laquelle l'épaisseur de la couche de matériau actif d'anode et de la couche protectrice après un traitement de laminage représente 20 % à 90 % de l'épaisseur de la couche de matériau actif d'anode et de la couche protectrice avant le traitement de laminage,
dans laquelle la résistance à la traction à température ambiante du collecteur de courant en feuille de cuivre électrolytique est de 30 kgf/mm$^2$ à 50 kgf/mm$^2$ (294,2 MPa à 490,3 MPa), et la résistance à la traction à température élevée du collecteur de courant en feuille de cuivre électrolytique après maintien du collecteur de courant en feuille de cuivre électrolytique à une température de 140 °C pendant six heures est de 20 kgf/mm$^2$ à 50 kgf/mm$^2$ (196,1 MPa à 490,3 MPa),
dans laquelle l'énergie interne du collecteur de courant en feuille de cuivre électrolytique selon la formule 1 ci-dessous est de 0,3 kgf/mm à 8,5 kgf/mm (0,00294 J à 0,0836 J).

```
[Formule 1]
Énergie     interne (kgf/mm) = résistance      à      la
traction (kgf/mm²)  x  pourcentage  d'allongement (%)  x
épaisseur (mm).
```

2. Anode selon la revendication 1, dans laquelle une rugosité de surface est prévue sur la seule surface ou les deux surfaces du collecteur de courant en feuille de cuivre électrolytique, et la couche de matériau actif d'anode est prévue sur la surface pourvue de la rugosité de surface dans le collecteur de courant en feuille de cuivre électrolytique.

3. Anode selon la revendication 1, dans laquelle la couche de matériau actif d'anode inclut une poudre de lithium et un liant, et un rapport en poids entre la poudre de lithium et le liant est de 90:10 à 99,5:0,5.

4. Anode selon la revendication 1, dans laquelle la couche protectrice inclut un atome de silicium (Si) de 1 % atomique ou plus dans une analyse de spectromètre par spectromètre à dispersion d'énergie (EDX).

5. Anode selon la revendication 1, dans laquelle la couche protectrice est formée par un traitement de couplage au silane par l'utilisation d'un ou de plusieurs agents de couplage au silane choisis parmi méthyltriméthoxysilane, tétraéthoxysilane, 3-glycidoxypropyl triméthoxysilane, 2-(3,4-époxycyclohexyl)étyltriméthoxysilane, 3-aminopropyl triméthoxysilane, N-2-(aminoéthyl)-3-aminopropyl trimétyhoxysilane, N-2-(aminoéthyl)-3-aminoprophylméthyl déméthoxysilane, vinyl triméthoxysilane, vinyl phényl triméthoxysilane, vinyltris(2-méthoxyéthoxy)silane, 3-acryloxypropyl triméthoxysilane, 3-méthacryloxypropyl triméthoxysilane, 3-mercaptopropyltriméthoxysilane, diméthylchlorosilane, méthyldichlorosilane, méthyltrichlorosilane, phényltrichlorosilane, trichlorosilane, triméthylchlorosilane, tétrachlorure de silicium, et vinyltrichlorosilane.

6. Anode selon la revendication 1, dans laquelle l'épaisseur de la couche de matériau actif d'anode et de la couche protectrice est de 20 $\mu$m, et une capacité est de 4,2 mAh/cm$^2$ ou plus.

7. Anode selon la revendication 1, l'anode étant prévue dans un type de feuillet ayant un petit axe et un grand axe, et une longueur moyenne (largeur) du petit axe est de 150 mm à 2000 mm.

8. Anode selon la revendication 1, dans laquelle un rapport NP (une capacité d'anode par aire unitaire/une capacité de cathode par aire unitaire) est de 18 ou moins.

9. Anode selon la revendication 1, dans laquelle, lorsqu'une densité de courant de la batterie secondaire est de 10 mA/cm$^2$, le temps d'écoulement est de 100 minutes ou plus.

10. Anode selon la revendication 1, dans laquelle une valeur de potentiel mesurée 60 heures après un essai de cyclage symétrique est de 0,2 V à -0,2 V, dans laquelle l'essai de cyclage symétrique est effectué par laminage de la couche de matériau actif d'anode.

[FIG. 1]

① = section showing quasi-stationary behavior

② = section having sharp decrease due to short by dendrite

[FIG. 2]

[FIG. 3]

[FIG. 4A]

S4800 10.0kV 8.1mm x400 SE(M)     100um

[FIG. 4B]

S4800 10.0kV 8.3mm x400 SE(M)　　　　　　100um

[FIG. 5]

[FIG. 6]

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20127011002
- JP 5286763 A
- JP 10003920 A
- CN 104966814 A